# EUROPÄISCHE PATENTANMELDUNG

(11) **EP 1 890 140 A1**
(43) Veröffentlichungstag der Anmeldung: **20.02.2008**
(21) Anmeldenummer: 06017048.7
(22) Anmeldetag: 16.08.2006
(51) Int. Cl.: G01N 29/04

(54) **Verfahren zum Prüfen der Gefügestruktur einer Schweissverbindung**

(71) Anmelder: SIEMENS AKTIENGESELLSCHAFT, 80333 München (DE)
(72) Erfinder: Puchner, Korbinian, 82234 Wessling (DE); Siegel, Michael, 46487 Wesel (DE)

(57) **Zusammenfassung**

Ein Verfahren zum Prüfen der Gefügestruktur einer Schweißverbindung (10, 12, 14) auf eine innenliegende Schädigung, beispielsweise bedingt durch Werkstoffkriechen, umfasst die Schritte: Erzeugen mindestens einer Ultraschall-Oberflächenwelle mittels eines ersten Prüfkopfes (30), Empfangen der mindestens einen Ultraschall-Oberflächenwelle mittels eines zweiten Prüfkopfes (32, 42), Bestimmen der akustischen Eigenschaften in der Gefügestruktur auf der Grundlage der Relation zwischen erzeugter und empfangener Ultraschall-Oberflächenwelle und Bestimmen des Schädigungsgrades der innenliegenden Gefügestruktur auf der Grundlage der ermittelten akustischen Eigenschaften.

## Beschreibung

Die Erfindung betrifft ein Verfahren zum Prüfen der Gefügestruktur einer Schweißverbindung auf eine innenliegende bzw. von der Außenoberfläche eines Bauteils sich bis in tieferliegende Querschnitte erstreckende Schädigung, beispielsweise bedingt durch Werkstoffkriechen.

Insbesondere in der Energietechnik werden an Schweißverbindungen, beispielsweise an Turbinenkomponenten wie Frischdampfrohrleitungen von einem Kessel zur eigentlichen Turbine oder turbineninternen Rohrleitungen, sehr hohe Anforderungen hinsichtlich der Qualität der Gefügestruktur gestellt. Zugleich unterliegen diese Schweißverbindungen sehr hohen Belastungen. Im Gegensatz zu nur im Streckgrenzen- oder Warmstreckgrenzenbereich beanspruchten Anlagen haben Bauteile, welche unter sehr hohen Betriebstemperaturen arbeiten, eine durch Werkstoffkriechen bedingte begrenzte Lebensdauer. Um die Sicherheit und Verfügbarkeit solcher durch Werkstoffkriechen beanspruchter Bauteile zu gewährleisten, sind zuverlässige Prüfungen, insbesondere an den zugehörigen Schweißverbindungen durchzuführen. Dies gilt insbesondere für die im Zeitstandbereich betriebenen Frischdampfrohrleitungen.

Zur Prüfung derartiger Schweißverbindungen sind bislang nur konventionelle Gefügeabdrucktechniken (metallografische Untersuchungen) an der unmittelbaren Bauteiloberfläche bekannt. Dabei können aufgrund des hohen Aufwandes für solche Prüfungen nur begrenzte und im Voraus definierte Bereiche untersucht werden. Andere Bereiche bleiben hingegen ungeprüft. Zudem erfordert diese arbeits- und zeitintensive Prüftechnik sehr gut ausgebildetes und erfahrenes Personal. Die Ergebnisse müssen vom Prüfpersonal schließlich noch subjektiv beurteilt werden, so dass es zu stark unterschiedlichen Bewertungen kommen kann.

Es ist eine Aufgabe, der vorliegenden Erfindung ein Verfahren zum Prüfen der Gefügestruktur einer Schweißverbindung anzugeben, bei dem die oben genannten Nachteile zumindest verringert sind. Das Verfahren soll insbesondere weniger arbeits- und zeitintensiv und dadurch insgesamt kostengünstiger und zuverlässiger sein.

Die Aufgabe ist erfindungsgemäß mit einem Verfahren zum Prüfen der Gefügestruktur einer Schweißverbindung auf eine innenliegende Schädigung, beispielsweise bedingt durch Werkstoffkriechen mit den im Anspruch 1 genannten Schritten gelöst. Vorteilhafte Weiterbildungen der Erfindung sind in den abhängigen Ansprüchen genannt.

Erfindungsgemäß wird zum Prüfen der Gefügestruktur einer Schweißverbindung auf eine innenliegende Schädigung ein Verfahren mit folgenden Schritten verwendet: Erzeugen mindestens einer Ultraschall-Oberflächenwelle mittels eines ersten Prüfkopfes, Empfangen der mindestens einen Ultraschall-Oberflächenwelle mittels eines zweiten Prüfkopfes, Bestimmen der akustischen Eigenschaften, insbesondere der Schallgeschwindigkeit, in der Gefügestruktur der Schweißverbindung auf der Grundlage der Relation zwischen erzeugter und empfangener Ultraschall-Oberflächenwelle, Bestimmen des Schädigungsgrades der innenliegenden Gefügestruktur der Schweißverbindung auf der Grundlage der ermittelten akustischen Eigenschaften.

Mit anderen Worten werden erfindungsgemäß zum Prüfen der Gefügestruktur einer Schweißverbindung Prüfköpfe angesetzt, welche eine hochgenaue Messung der akustischen Eigenschaften, insbesondere der Schallgeschwindigkeit von Ultraschallwellen ermöglichen. Die Ultraschallwellen werden dabei von der Oberfläche aus in die Tiefe der Schweißverbindung ausgesendet und bewegen sich insbesondere als Ultraschallwellen unterschiedlicher Eindringtiefe (Rayleigh-Oberflächenwelle) innerhalb der Gefügestruktur. Die Messung der akustischen Eigenschaften erfolgt nicht, wie konventionell üblich mit Schallimpulsen, sondern mit Hilfe einer kontinuierlichen Oberflächenwelle. Mit diesem erfindungsgemäßen Verfahren können Schädigungen der Schweißverbindung insbesondere an zeitstandgeschädigten Kraftwerkskomponenten bereits im Frühstadium auf sehr kostengünstige Weise erkannt werden. Das erfindungsgemäße Verfahren umfasst ferner vorteilhaft die Schritte: Bestimmen der Phasenverschiebung zwischen der mindestens einen gesendeten und der mindestens einen empfangenen Ultraschall-Oberflächenwelle und Bestimmen der akustischen Eigenschaften, insbesondere der Schallgeschwindigkeit, in der Gefügestruktur auf der Grundlage der ermittelten Phasenverschiebung. Zum Bestimmen der Phasenverschiebung zwischen der mindestens einen gesendeten und der mindestens einen empfangenen Ultraschall-Oberflächenwelle werden bevorzugt breitbandige piezoelektrische Prüfköpfe mit einem entsprechenden Vorlaufkeil verwendet, die von einem Funktionsgenerator mit einem sinusförmigen Spannungssignal gespeist werden. Das Sendesignal sowie ein vorverstärktes Empfangssignal werden simultan auf getrennte Kanäle eines Oszilloskops gegeben, wodurch die Phasenverschiebung zwischen beiden Signalen bestimmt werden kann.

Zum Bestimmen der Phasenverschiebung zwischen der mindestens einen gesendeten und der mindestens einen empfangenen Ultraschall-Oberflächenwelle werden ferner die beiden Prüfköpfe bevorzugt relativ zueinander bewegt. Diese Bewegung der Prüfköpfe kann mittels mechanisierter Manipulatoren durchgeführt werden, welche insbesondere ein hochpräzises Wegmesssystem umfassen. Auf diese Weise ist ein spielfreies und exakt reproduzierbares Verschieben der beiden Prüfköpfe möglich. Beim Verschieben des empfangenden Prüfkopfes relativ zum sendenden Prüfkopf ändert sich die Phasenverschiebung der oben genannten Schwingungen von Sender- und Empfängersignal relativ zueinander. Die Phasenlage ist nicht nur durch Verschieben der Prüfköpfe zu ermitteln, sondern auch auf elektronischem Weg insbesondere über den Einsatz einer Hochfrequenz-Komparatorschaltung. Dabei entfällt jegliche Manipulation der Prüfköpfe und auch das Wegmesssystem kann entfallen. Eine Änderung der Phasenverschiebung um einen kompletten Phasenumlauf von 2π entspricht einem Verfahrweg von exakt einer Wellenlänge.

Besonders bevorzugt werden bei dem erfindungsgemäßen Verfahren die Prüfköpfe relativ zueinander über eine Entfernung von der Länge mehrerer Wellenlängen bewegt und daraus die Wellenlänge der Ultraschall-Oberflächenwelle in der Gefügestruktur gemittelt errechnet. Durch die Mittelung der Wellenlänge über den Verfahrweg der Prüfköpfe ist eine sehr hohe Messgenauigkeit erreichbar.

Zum genauen Bestimmen von innenliegenden Schädigungen der Gefügestruktur einer Schweißverbindung mittels des erfindungsgemäßen Verfahrens sind ferner die folgenden Schritte vorgesehen: Verändern der Frequenz der mindestens einen gesendeten Ultraschall-Oberflächenwelle und Bestimmen der akustischen Eigenschaften in der Gefügestruktur auf der Grundlage des Gradienten der entsprechenden Veränderung der Wellenlänge der mindestens einen empfangenen Ultraschall-Oberflächenwelle. Über das derart ermittelte Geschwindigkeitsprofil von Ultraschallwellen innerhalb der Gefügestruktur können über den zugehörigen Werkstoffquerschnitt hinweg die notwendigen Rückschlüsse auf eine Schädigung der Schweißverbindung gezogen werden. Als Bewertungskriterium dienen dabei wie genannt zum Einen die absolute Höhe der Schallgeschwindigkeit und zum Anderen der Gradient des Geschwindigkeitsprofils. Es können auch Relativmessungen durchgeführt werden. Dabei wird die Änderung der Phasenlage bei einer konstanten Prüffrequenz über den Schweißnahtquerschnitt ausgewertet. Zusätzlich können Vergleichsmessungen an weniger beanspruchten Stellen desselben Bauteils durchgeführt werden.

Darüber hinaus ist es bei dem erfindungsgemäßen Verfahren bevorzugt zum Bestimmen der Phasenverschiebung zwei als Empfänger wirkende Prüfköpfe auf Phasengleichheit der von ihnen empfangenen Ultraschall-Oberflächenwellen einzuregeln. Auf diese Weise ist eine weitere Erhöhung der Messqualität möglich, da bei einer solchen Kopf-an-Kopf-Anordnung der messtechnisch relevante Prüfkopfabstand durch einen mit der Messfrequenz veränderlichen Wellenaustrittspunkt aus dem Vorlaufkeil des Prüfkopfes variieren könnte. Dies wird durch vergleichbare Bedingungen für die Signalaufnahme bei zwei als Empfänger wirkenden Prüfköpfen mit identischer Ausrichtung umgangen.

Um eine schichtweise Abtastung der erfindungsgemäß zu prüfenden Schweißverbindung zu ermöglichen, ist es von Vorteil aufeinander folgende Ultraschall-Oberflächenwellen zu erzeugen und zu empfangen, welche verschiedene Wellenlängen aufweisen, und auf diese Weise eine geschichtete Prüfung der Schweißverbindung von der Oberfläche in die Tiefe zu generieren.

Schließlich ist es bei dem erfindungsgemäßen Verfahren noch bevorzugt vorgesehen, zunächst ein grob gerastertes Abtasten der Schweißverbindung, insbesondere in deren Querrichtung, und nachfolgend ein feingerastertes Abtasten einer ermittelten innenliegenden Schädigung der Gefügestruktur durchzuführen. Das feingerasterte Abtasten erfolgt dabei insbesondere bevorzugt in Längsrichtung der jeweiligen Schweißverbindung.

Nachfolgend werden Ausführungsbeispiele des erfindungsgemäßen Verfahrens zum Prüfen der Gefügestruktur einer Schweißverbindung auf eine innenliegende Schädigung anhand der beigefügten schematischen Zeichnungen näher erläutert. Es zeigt:
Fig. 1 einen Querschnitt eines mit dem erfindungsgemäßen Verfahren geprüften Bauteils,
Fig. 2 den Verlauf von Messkurven an einem erfindungsgemäß geprüften, geschädigten Bauteil und einem erfindungsgemäß geprüften, ungeschädigten Bauteil,
Fig. 3 weitere Verläufe von Messkurven an derartigen Bauteilen,
Fig. 4 eine perspektivische Ansicht eines erfindungsgemäß geprüften Bauteils bei einem so genannten Grob-Scanning,
Fig. 5 eine perspektivische Ansicht eines erfindungsgemäß geprüften Bauteils bei einem so genannten Fein-Scanning,
Fig. 6 eine perspektivische Ansicht eines erfindungsgemäß geprüften Bauteils mit dargestellter Lage von Messspuren,
Fig. 7 ein erstes Ausführungsbeispiel eines Messaufbaus für das erfindungsgemäße Verfahren,
Fig. 8 ein zweites Ausführungsbeispiel eines Messaufbaus für das erfindungsgemäße Verfahren,
Fig. 9 ein drittes Ausführungsbeispiel eines Messaufbaus für das erfindungsgemäße Verfahren und
Fig. 10 eine schematische Darstellung der Entwicklung von erfindungsgemäß ermittelten Messparametern über die Beanspruchungsdauer eines hochtemperaturbeanspruchten Bauteils hinweg.

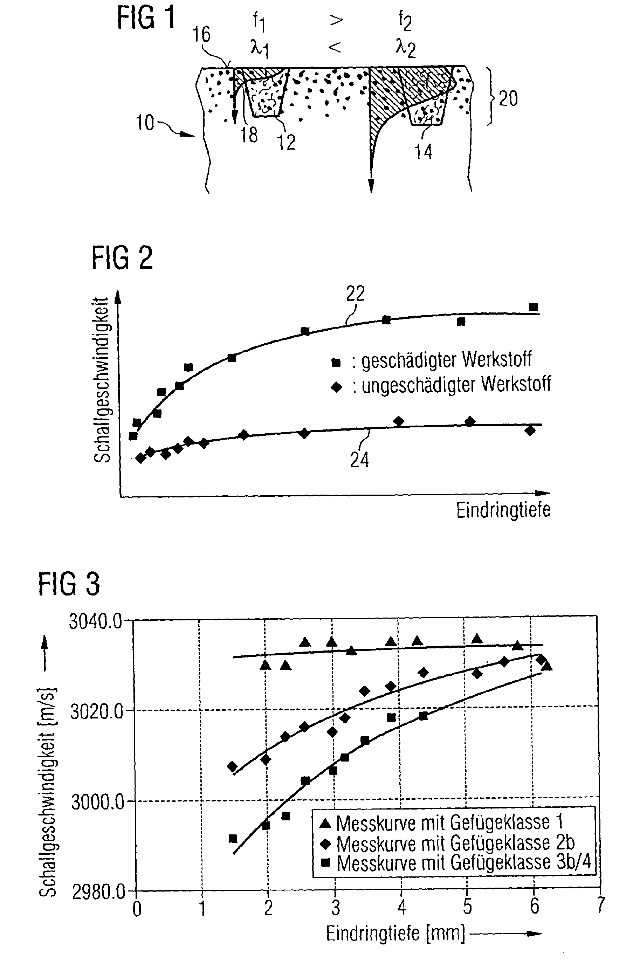

In Fig. 1 ist ein Querschnitt eines Bauteils 10 veranschaulicht, an dem sich eine erste Schweißnaht 12 und eine zweite Schweißnaht 14 befindet. Diese beiden Schweißnähte 12 und 14 werden mit einem Verfahren zum Prüfen der Gefügestruktur auf eine innenliegende Schädigung, insbesondere auf eine Zeitstandschädigung, wie beispielsweise bedingt durch Werkstoffkriechen, untersucht. Dabei wird an einer Oberfläche 16 des Bauteils 10 in einem in Fig. 1 nicht dargestellten Prüfkopf eine Ultraschall-Oberflächenwelle erzeugt, welche mittels eines in Fig. 1 ebenfalls nicht dargestellten zweiten Prüfkopfes empfangen bzw. aufgenommen wird. Aus einem Vergleich der empfangenen Ultraschall-Oberflächenwelle mit der gesendeten Ultraschall-Oberflächenwelle und einer daraus errechneten Schallgeschwindigkeit in der Gefügestruktur des Bauteils 10 kann, wie nachfolgend näher erläutert wird, der Schädigungsgrad der Gefügestruktur bestimmt werden. Das Verfahren ermöglicht dabei eine tiefenabhängige Prüfung von zeitstandbeanspruchten bzw. zeitstandgeschädigten Schweißverbindungen. Diese Prüfung ist selbst an einem bei Schweißverbindungen in der Regel vorzufindenden inhomogenen Gefügeaufbau mit hohen örtlichen und auch tiefenabhängigen Unterschieden in den Werkstoffeigenschaften möglich.

Darüber hinaus ist mit dem Verfahren sichergestellt, dass das Ergebnis rein auf physikalischen Größen basiert und objektiv erhoben wird.

Neben einer Erfassung der absoluten Höhe der Schallgeschwindigkeit in der Gefügestruktur des Bauteils 10 lässt sich durch eine Veränderung der Frequenz der gesendeten Ultraschall-Oberflächenwellen deren Eindringtiefe verändern. Mit diesen so genannten Rayleigh-Wellen kann dann ein Tiefenprofil der Schallgeschwindigkeit in der Gefügestruktur des Bauteils 10 erstellt werden. Durch gezieltes integrales Erfassen der akustischen Eigenschaften bei unterschiedlichen Eindringtiefen kann mit den Ultraschall-Oberflächenwellen auf diese Weise ein Schallgeschwindigkeitsprofil erstellt werden, dessen Verlauf durch einen Fortschritt einer Schädigung an dem Bauteil 10 empfindlich beeinflusst wird. Dies stellt einen erheblichen Erkenntnisgewinn insbesondere bei der Beurteilung von Zeitstandschäden dar.

In Fig. 1 ist veranschaulicht, dass unter Annahme einer maximalen Porenkonzentration an der Oberfläche 16 eine Ultraschall-Oberflächenwelle 18 geringer Eindringtiefe zunächst nur einen Bereich 20 der am stärksten geschädigten Gefügestruktur durchdringt. Setzt man eine stetige Annahme der Schädigung mit der Tiefe des Bauteils 10 voraus, nimmt der von der Ultraschall-Oberflächenwelle 18 integral erfasste, weniger geschädigte Werkstoffanteil mit zunehmender Eindringtiefe anteilmäßig zu (siehe Fig. 1).

An der Oberfläche 16 wird deshalb als dem Ort der stärksten Schädigung ein Schallgeschwindigkeitsminimum gemessen, während durch die mit zunehmender Eindringtiefe geringer werdende Porenkonzentration eine Zunahme der Schallgeschwindigkeit zu verzeichnen ist. In Fig. 1 ist dabei eine Variation einer Frequenz f von f₁ hin zu f₂ veranschaulicht, welche in einem Bereich von 400 KHz bis 3 MHz liegt. Im Gegenzug verändert sich die Wellenlänge der zugehörigen Ultraschall-Oberflächenwelle λ von einem Wert λ₁ hin zu einem Wert von λ₂ mit Eindringtiefen von zirka 1 mm bis zirka 8 mm.

In Fig. 2 ist veranschaulicht, dass eine oberflächennahe Kriechschädigung folglich zu deutlich unterschiedlichen Schallgeschwindigkeit zwischen der Oberfläche 16 und einem tiefer gelegenen Bereich des Bauteils 10 führt (siehe Messkurve 22), während bei einem schädigungsfreien bzw. ungeschädigten Werkstoff ein nahezu tiefenkonstanter Verlauf (siehe Messkurve 24) zu beobachten ist. Aus dem Krümmungsverhalten der Messkurven 22 und 24 bzw. deren Kurvengradient kann somit auf den Schädigungsfortschritt in Bezug auf die Oberfläche 16 als Referenzbereich geschlossen werden.

Es werden dabei mehrere Frequenzen gewählt, so dass sich eine Anzahl Schichten bzw. Stützstellen ergeben, die den Verlauf der Schallgeschwindigkeit im Verhältnis zum Abstand zur Oberfläche 16 beschreiben. Dabei werden, wie erwähnt, Frequenzen zwischen zirka 400 KHz bis zirka 3 MHz gewählt, woraus sich bei den üblicherweise zu untersuchenden Werkstoffen eine Eindringtiefe von bis zu 8 mm ergibt. Die Messtiefe mit dem derartigen Verfahren ist also erheblich.

Zur Durchführung einer vergleichenden Bewertung der Verläufe der Messdaten bzw. der in Fig. 2 veranschaulichten Messkurven 22 und 24 wird deren Verlauf erfindungsgemäß mathematisch beschrieben. Ein beispielhafter Vergleich verschiedener realer Messdaten ist in Fig. 3 dargestellt. Dabei variieren die Tiefenverläufe der Schallgeschwindigkeiten hinsichtlich der Parameter absolute Höhe der Schallgeschwindigkeit, Tiefenverlauf der Schallgeschwindigkeit und Messbereich (minimale/maximale Eindringtiefe) teilweise beachtlich.

Um insbesondere eine rechnergestützte Beurteilung der Messdaten zu ermöglichen, wird daher eine mathematische Beschreibung der Daten angestrebt, ohne jedoch wichtige Informationen aus deren Verlauf zu unterdrücken. Eine umfangreiche Regressionsanalyse einer Vielzahl von Messdaten hat ergeben, dass der Tiefenverlauf der Messdaten durch einen logarithmischen Regressionsansatz der Form cᵢₙₜ = K * ln(t) + c₀ beschrieben werden kann. Dabei ist t die Tiefenkoordinate, cᵢₙₜ ein integraler Messwert der Schallgeschwindigkeit, c₀ der Wert der absoluten Schallgeschwindigkeit bei t = 0 (Oberfläche 16) und K ein Gradientenkoeffizient bzw. eine Gradientenzahl.

Die Gleichung erfüllt die Anforderungen an ein mathematisches Beschreibungsmodel in weitgehend optimaler Weise. Zur Beschreibung sämtlicher Messkurven sind somit zwei charakteristische Größen hinreichend, nämlich die Angabe einer Oberflächenschallgeschwindigkeit c₀ sowie eines Gradientenkoeffizienten K.

Neben der Bestimmung der Schallgeschwindigkeit c₀ als Bestimmungsgröße für die absoluten Höhen von Schallgeschwindigkeiten innerhalb der Gefügestruktur des Bauteils 10 kann aus dem bekannten Kurvenverlauf die integrale Schallgeschwindigkeit an einer beliebigen Stelle im Inneren des Bauteils errechnet werden. Bei der Anwendung dieses Vorgehens auf Schweißverbindungen bzw. die in Fig. 1 dargestellten Schweißnähte 12 und 14 können so gemessene und errechnete Schallgeschwindigkeiten in tieferen Gefügestrukturen gegenüber gestellt werden.

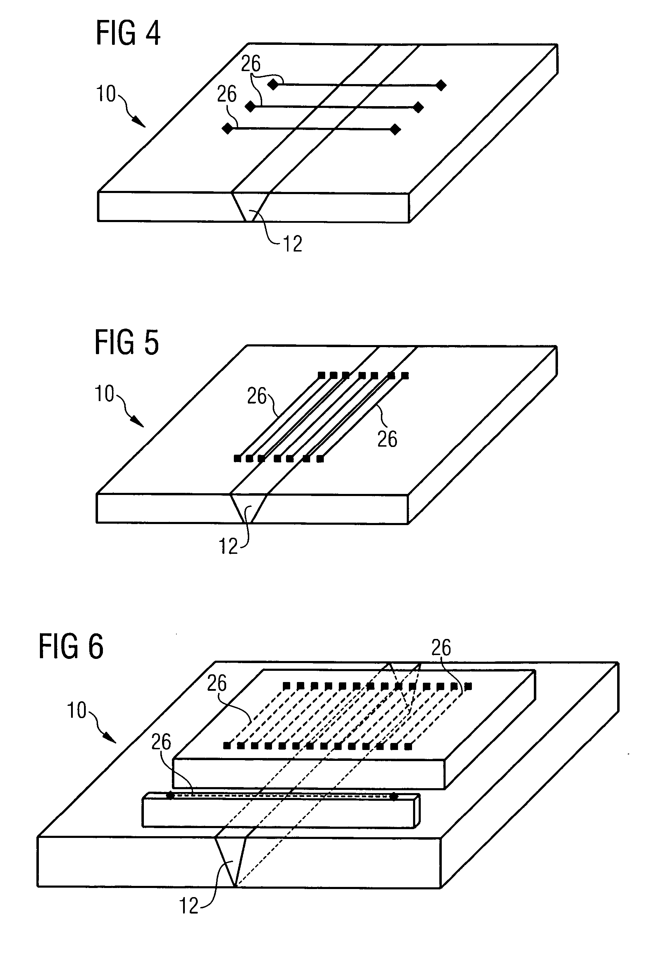

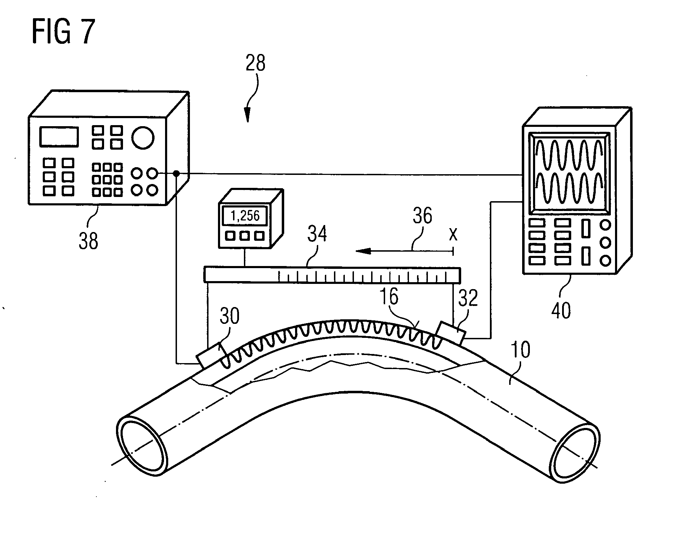

In den Fig. 4 bis 6 ist die räumliche Vorgehensweise bei dem erfindungsgemäßen Verfahren zum Prüfen der Gefügestruktur einer Schweißnaht 12 an einem Bauteil 10 veranschaulicht. Zunächst wird für eine Übersichtsbeurteilung ein so genanntes Grob-Scanning (Fig. 4) durchgeführt, wobei einzelne Messspuren 26 quer zur Längserstreckung der Schweißnaht 12 gerichtet sind. Diese Messspuren 26 stellen den Weg zwischen zwei (nachfolgend in den Fig. 7 bis 9 veranschaulichten) Prüfköpfen dar, welche einzeln oder gegebenenfalls zusammen längs dieser Messspuren 26 verschoben werden. Mit dem in Fig. 4 veranschaulichten Grob-Scanning werden Fehlstellen in der Gefügestruktur der Schweißnaht 12 sowie dem unmittelbar umliegenden Bauteil aufgespürt. In einem zweiten, in Fig. 5 veranschaulichten Verfahrensschritt, dem so genannten Fein-Scanning, werden nachfolgend einzelne Messspuren 26 parallel zur Längserstreckung der Schweißnaht 12 ausgerichtet. Auf diese Weise erfolgt eine detaillierte Beurteilung des Werkstoffvolumens. Aus den derart ausgerichteten Einzelmessungen erhält man sowohl ein Schallgeschwindigkeitsprofil als auch ein Gradientenprofil von Messkurven, wie sie in den Fig. 2 und 3 veranschaulicht sind. Aus der Veränderung dieser Messkurven während der Lebensdauer des zugehörigen Bauteils kann auf eine sich fortentwickelnde Schädigung der Schweißnaht 12 geschlossen werden.

In Fig. 6 ist nochmals veranschaulicht, dass gemäß der erfindungsgemäßen Vorgehensweise eine vollständige Charakterisierung einer Schweißnaht 12 in deren räumlicher Ausdehnung möglich ist, wobei sich diese räumliche Ausdehnung aus der Länge der Messspuren 26, der Anzahl und dem Abstand der Einzelmessungen sowie der Eindringtiefe der Ultraschall-Oberflächenwellen ergibt.

In Fig. 7 ist ein erstes Ausführungsbeispiel eines Messaufbaus 28 zum Ausführen des erfindungsgemäßen Verfahrens veranschaulicht. Es ist ein erster, als Sender für Ultraschall-Oberflächenwellen wirkender Prüfkopf 30 sowie ein zweiter, als Empfänger der Ultraschall-Oberflächenwellen wirkender Prüfkopf 32 vorgesehen. Die beiden Prüfköpfe 30 und 32 sind an einem Manipulator 34 angeordnet, mittels dem ein nahezu spielfreies und exakt reproduzierbares Verschieben der beiden Prüfköpfe 30 und 32 auf dem zu prüfenden Bauteil 10 entlang einer Geraden gewährleistet ist. Die relative Verfahrposition der beiden Prüfköpfe 30 und 32 wird über ein hochpräzises Wegmesssystem 36 aufgezeichnet.

Der als Sender wirkende Prüfkopf 30, welcher als ein breitbandiger piezoelektrischer Prüfkopf mit entsprechendem Vorlaufkeil gestaltet ist, wird von einem Funktionsgenerator 38 mit einem sinusförmigen Spannungssignal gespeist und erzeugt dabei eine kontinuierliche Ultraschall-Oberflächenwelle. Diese Ultraschall-Oberflächenwelle breitet sich an der Oberfläche 16 des Bauteils 10 entlang einer Achse des Prüfkopfes 30 aus und wird durch den vorliegend entgegengerichtet angeordneten Prüfkopf 32 aufgenommen. Das Sendersignal sowie das vorverstärkte, vom Prüfkopf 32 empfangene Signal werden simultan auf getrennte Kanäle eines Oszilloskops 40 gegeben, wodurch eine Phasenverschiebung zwischen beiden Signalen bestimmt werden kann.

Zugleich wird der als Empfänger wirkende Prüfkopf 32 relativ zum als Sender wirkenden Prüfkopf 30 verschoben, wodurch sich eine Phasenverschiebung der Senderschwingung relativ zur Empfängerschwingung ergibt. Eine Änderung der Phasenverschiebung um einen kompletten Phasenumlauf von 2π entspricht einem Verfahrweg von exakt einer Wellenlänge.

Der Verschiebeweg während eines Messvorgangs beträgt je nach den Abmessungen des zu prüfenden Bauteils 10 und der Größe der verwendeten Prüfköpfe 30 und 32 zirka 50 mm bis zirka 100 mm, wobei die Änderung der Phasenverschiebung als eine Funktion der Messlänge aufgezeichnet wird. Die derart ermittelten Daten ermöglichen aufgrund einer Berücksichtigung der Anzahl der überstrichenen Phasenverschiebungen und der Länge der Messtrecke die Berechnung einer mittleren Wellenlänge der Ultraschall-Oberflächenwelle im Bauteil 10. Die Schallgeschwindigkeit c im Bauteil 10 wird dann anhand der Wellenlänge λ und der Frequenz f, welche durch den Frequenzgenerator 38 vorgegeben ist, berechnet. Durch die Mittelung der Wellenlänge über den Verfahrweg der Prüfköpfe 30 und 32 ist auf diese Weise eine sehr hohe Messgenauigkeit erreichbar.

Wie oben erläutert, führt bei dem derartigen Messverfahren eine oberflächennah vorliegende Schädigung der Gefügestruktur einer Schweißnaht 12 oder 14 am Bauteil 10 zu einem tiefenabhängigen Gradienten der ermittelten Schallgeschwindigkeit c und durch eine Auswertung des Geschwindigkeitsprofils über den Querschnitt der Schweißnaht 12 oder 14 sind Rückschlüsse auf deren Schädigungsgrad möglich.

Durch das oben erläuterte Grob-Scanning (Fig. 4) ist ein Aufspüren von Fehlstellen innerhalb kurzer Zeit möglich, wobei anschließend auffällige Messstellen in einem verfeinerten Prüfvorgang (unter Anwendung mehrerer Messfrequenzen) einem detaillieren Fein-Scanning (Fig. 5) unterzogen werden.

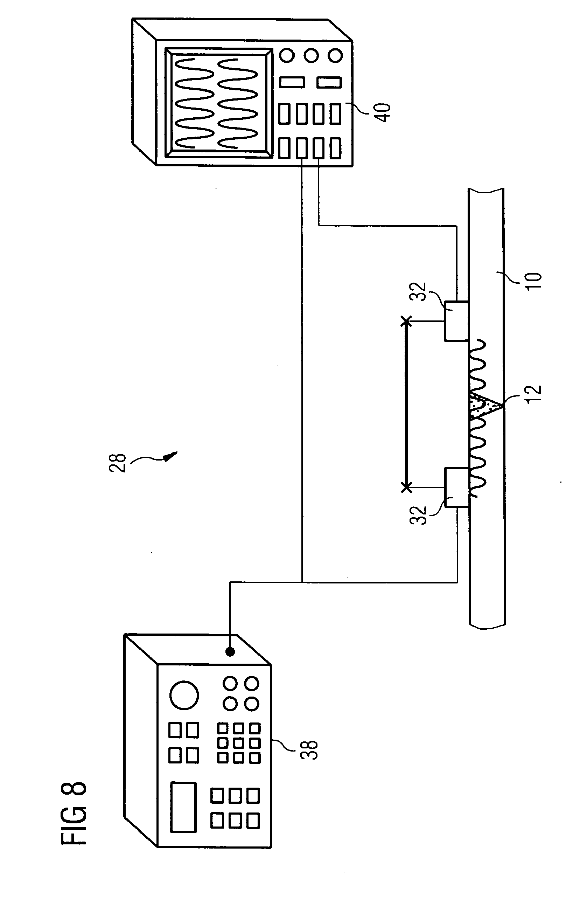

In Fig. 8 ist eine alternative Ausführungsform eines Messaufbaus 28 veranschaulicht, bei dem zwei Prüfköpfe 30 und 32 jeweils in einer festen Prüfkopfanordnung angeordnet sind. Diese Prüfköpfe 30 und 32 sind jeweils wieder an einen Funktionsgenerator 38 und ein Oszilloskop 40 angeschlossen. Im Unterschied zum in Fig. 7 dargestellten Messaufbau 28 ist vorliegend nicht ein Verschieben der Prüfköpfe 30 und 32 mittels eines Manipulators vorgesehen, sondern die Prüfköpfe 30 und 32 sind ortsfest angeordnet und es wird an ihnen als veränderlich Größe die Messfrequenz variiert. Aufgrund dieser Vorgehensweise entfallen die Kosten für den Manipulator und das Wegmesssystem. Die Messung kann ferner voll automatisch ablaufen.

Die Anordnung gemäß Fig. 8 kann auch dazu verwendet werden, um bei konstantem Prüfkopfabstand eine Änderung der Phasenlage zwischen beiden Signalen relativ zu einer Bezugsgröße (z.B. Grundwerkstoff) auszuwerten. Dazu wird die starre Anordnung der Prüfköpfe 30 und 32 über die Schweißnaht hinweg bewegt und die örtlichen Änderungen der Phasenlage als Reaktion auf Werkstoffveränderungen ausgewertet. Dies kann elektronisch geschehen (Komparatorschaltung). Der Frequenzbereich und damit die Tiefenwirkung des Verfahrens bleiben davon unberührt.

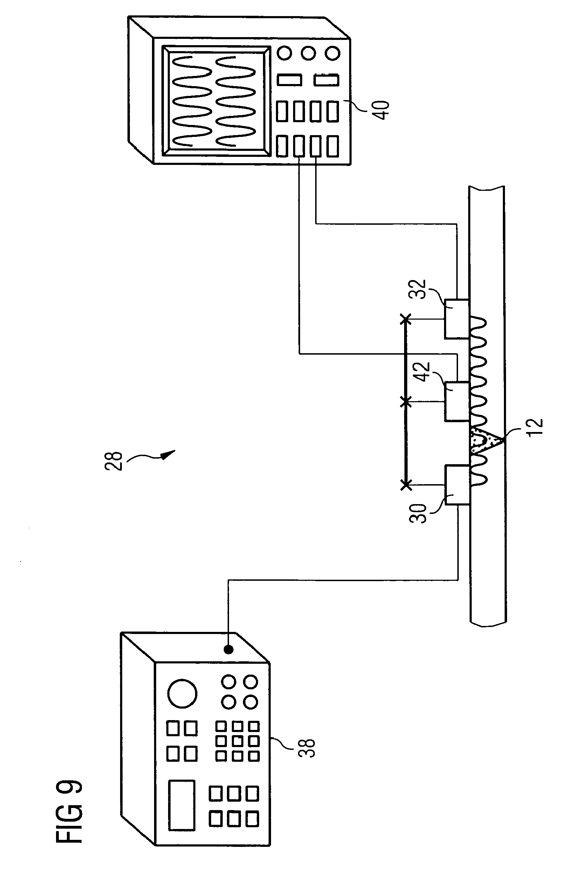

In Fig. 9 ist eine Ausführungsform eines Messaufbaus 28 veranschaulicht, bei dem insgesamt drei ortsfeste Prüfköpfe 30, 32 und 42 vorgesehen sind, von denen der Prüfkopf 30 an einen Funktionsgenerator 38 und die Prüfköpfe 32 und 42 als Empfänger wirkend an ein Oszilloskop 40 angeschlossen sind. Die Signale der beiden als Empfänger wirkenden Prüfköpfe 32 und 42 werden auf Phasengleichheit eingeregelt. Dadurch kann die Präzision der Messung weiter erhöht werden, da bei einer Kopf-an-Kopf-Anordnung der messtechnisch relevante Prüfkopfabstand durch einen mit der Messfrequenz veränderlichen Austrittspunkt aus dem Vorlaufkeil des zugehörigen Prüfkopfes variieren könnte, dies aber durch die vorliegend bereitgestellten vergleichbaren Bedingungen für die Signalaufnahme an den beiden als Empfänger wirkenden Prüfköpfen 32 und 42 mit identischer Ausrichtung umgangen werden kann.

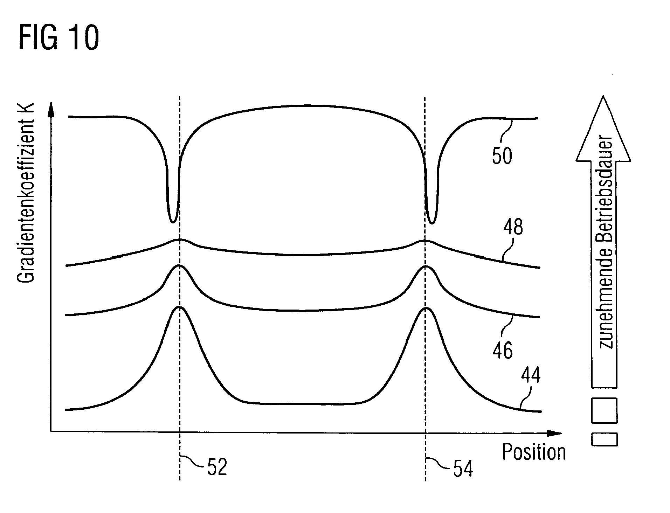

In Fig. 10 ist eine Auswertung von Verläufen der Höhe der Schallgeschwindigkeit über den Querschnitt einer der Schweißnähte 12 oder 14 veranschaulicht. Die Fig. 10 veranschaulicht, dass durch das Schallgeschwindigkeitsprofil eine Beschreibung des Schädigungszustandes der Gefügestruktur an einer Schweißnaht möglich ist.

Fig. 10 zeigt insgesamt vier Kurven 44, 46, 48 und 50, welche jeweils den Verlauf des Gradienten der Schallgeschwindigkeit über eine Position quer zu einer Längserstreckung einer Schweißnaht veranschaulichen. Dabei zeigt die Linie 44 eine Schweißnaht im Neuzustand, die Linie 46 eine betriebsbeanspruchte Schweißnaht, die Linie 48 eine fortgeschritten betriebsbeanspruchte Schweißnaht und Linie 50 schließlich eine Schweißnaht mit geschädigter Gefügestruktur.

Die Linie 44 weist grundsätzlich eine M-Form auf, welche sich mit ihren beiden Maxima jeweils im Bereich von Schmelzlinien 52 und 54 erstreckt. Diese Schmelzlinien bilden jeweils den Grenzbereich zwischen einer Seite der Schweißnaht und dem angrenzenden Bauteil.

Neben dem Schallgeschwindigkeitmaxima im Bereich der Schmelzlinien 52 und 54 erfolgt nach einer Phase der Homogenisierung ein massiver Schallgeschwindigkeitseinbruch an den Wärmeeinflusszonen der Schweißnaht. Eine abnehmende Tendenz der Schallgeschwindigkeit ist zudem sowohl im Schweißgut der Schweißnaht als auch im Grundwerkstoff des zugehörigen Bauteils zu verzeichnen.

Die derartig grundsätzlich M-förmige Linie 44 flacht über die zunehmende Betriebsdauer des zugehörigen Bauteils hinweg zunehmen ab (siehe die Linien 46 und 48 in Fig. 10). Im geschädigten Zustand der Schweißnaht ergibt sich schließlich eine grundsätzlich W-förmige Linie 50, wobei diese Änderung des Gradientenkoeffizienten K von einer M-Form im Neuzustand über eine Abflachung im betriebsbeanspruchten Zustand zu einer W-Form im geschädigten Zustand deutlich den qualitativen Entwicklungsverlauf an der zugehörigen Schweißnaht zeigt.

Mittels einer Analyse der probenspezifischen Verläufe der Gradientenkoeffizienten K und einer Gegenüberstellung der Tiefenverläufe der Schallgeschwindigkeiten c an den jeweiligen Messstellen ist somit eine präzise Beurteilung von Schweißnähten möglich.

Der qualitativ ähnliche Verlauf des Gradientenkoeffizienten K und der Schallgeschwindigkeit c ist dabei rein zufällig. Den in den beiden Größen K und c zum Ausdruck gebrachten Werkstoffveränderungen liegen vielmehr unterschiedliche Vorgänge zugrunde. Während die Schallgeschwindigkeit c den Gefügezustand bezüglich einer Lebensdauerkurve beschreibt, gibt der Gradientenkoeffizient K Auskunft über den tiefenabhängigen Verlauf der akustischen Eigenschaften.

Im Ausgangszustand einer Schweißnaht weist die Gefügestruktur insbesondere im Bereich der Schmelzlinien (Erstarrungsstruktur) eine sehr inhomogene Verteilung unterschiedlicher Zustände auf. Dies äußert sich innerhalb der Messkurven bzw. Linien 44 bis 50 durch lokal auf diese Bereiche begrenzte Gradientenkoeffizienten K hoher Ausprägung. Wenn eine Einebnung im Verlauf des Gradientenkoeffizienten K über den Schweißnahtquerschnitt festzustellen ist, erfolgt der messtechnische Nachweis einer langzeitigen Betriebsbeanspruchung auf hohem Temperaturniveau. Eine derartige Beanspruchung führt nämlich über eine so genannte Erholungsglühung zum fortschreitenden Abbau dieser lokalen Inhomogenitäten und damit zu geringeren Unterschieden der akustischen Eigenschaften innerhalb der Schweißnaht. Eine derartige Entwicklung ist an zeitstandbeanspruchten Rohrbögen vielfach bestätigt worden und äußert sich dort durch einen Anstieg der Schallgeschwindigkeit während dieser "Homogenisierungsphase", bis schließlich mit Eintritt einer irreversiblen Schädigung ein Absinken der absoluten Werte der Schallgeschwindigkeit c zu beobachten ist.

An Schweißverbindungen führt eine Zeitstandschädigung offensichtlich zu einer tiefenunabhängigen Schädigung der Bereiche an den Schmelzlinien 52 und 54, was sich durch die lokale Herabsetzung der Schallgeschwindigkeit c über die gesamte Eindringtiefe der zugehörigen Ultraschall-Oberflächenwelle belegen lässt. Während sich im Ausgangszustand dieser Messeffekt auf ein größeres Werkstoffvolumen im Bereich der Schmelzlinie 52 und 54 erstreckt, ist nach einem Eintreten einer Zeitstandsschädigung sowohl eine Verschiebung des Schwerpunktes der Schädigung in Richtung der Wärmeschmelzlinien 52 und 54 festzustellen. Insbesondere das Werkstoffgefüge bzw. die Werkstoffstruktur innerhalb der Schmelzlinien 52 und 54 (Feinkornzone) reagiert somit besonders sensibel auf eine zeitabhängige Werkstoffveränderung und stellt somit die Funktion eines Frühindikators dar. Eine Gegenüberstellung der genannten Parameter der Schallgeschwindigkeiten und deren Ausprägung vor allem quer über eine Schweißnaht hinweg stellt somit bereits im frühen Schädigungsstadium eine sensible Methode zur Zustandscharakterisierung von Schweißnähten dar.

## Patentansprüche

1. Verfahren zum Prüfen der Gefügestruktur einer Schweißverbindung (10, 12, 14) auf eine innenliegende Schädigung, beispielsweise bedingt durch Werkstoffkriechen, mit den Schritten:
- Erzeugen mindestens einer Ultraschall-Oberflächenwelle mittels eines ersten Prüfkopfes (30),
- Empfangen der mindestens einen Ultraschall-Oberflächenwelle mittels eines zweiten Prüfkopfes (32, 42),
- Bestimmen der akustischen Eigenschaften in der Gefügestruktur auf der Grundlage der Relation zwischen erzeugter und empfangener Ultraschall-Oberflächenwelle und
- Bestimmen des Schädigungsgrades der innenliegenden Gefügestruktur auf der Grundlage der ermittelten akustischen Eigenschaften.

2. Verfahren nach Anspruch 1 mit den Schritten:
- Bestimmen der Phasenverschiebung zwischen der mindestens einen gesendeten und der mindestens einen empfangenen Ultraschall-Oberflächenwelle,
- Bestimmen der akustischen Eigenschaften in der Gefügestruktur auf der Grundlage der ermittelten Phasenverschiebung.

3. Verfahren nach Anspruch 2, bei dem zum Bestimmen der Phasenverschiebung zwischen der mindestens einen gesendeten und der mindestens einen empfangenen Ultraschall-Oberflächenwelle die beiden Prüfköpfe (30, 32) relativ zueinander bewegt werden.

4. Verfahren nach Anspruch 3, bei dem die Prüfköpfe (30, 32) relativ zueinander über eine Entfernung von der Länge mehrere Wellenlängen bewegt und daraus die Wellenlänge der Ultraschall-Oberflächenwelle in der Gefügestruktur gemittelt wird.

5. Verfahren nach Anspruch 1 mit den Schritten:
- Verändern der Frequenz der mindestens einen gesendeten Ultraschall-Oberflächenwelle und
- Bestimmen der akustischen Eigenschaften in der Gefügestruktur auf der Grundlage des Gradienten der entsprechenden Veränderung der Wellenlänge der mindestens einen empfangenen Ultraschall-Oberflächenwelle.

6. Verfahren nach einem der vorhergehenden Ansprüche, bei dem zum Bestimmen der Phasenverschiebung zwei als Empfänger wirkende Prüfköpfe (32, 42) auf Phasengleichheit der von ihnen empfangenen Ultraschall-Oberflächenwellen eingeregelt werden.

7. Verfahren nach einem der vorhergehenden Ansprüche, bei dem aufeinander folgende Ultraschall-Oberflächenwellen erzeugt und empfangen werden, welche verschiedene Wellenlängen aufweisen, und auf diese Weise eine geschichtete Prüfung der Schweißverbindung von der Oberfläche in die Tiefe erfolgt.

8. Verfahren nach einem der vorhergehenden Ansprüche, bei dem zunächst ein grob gerastertes Abtasten der Schweißverbindung (10, 12, 14) und nachfolgend ein fein gerastertes Abtasten einer ermittelten innenliegenden Schädigung der Gefügestruktur erfolgt.
